# EUROPÄISCHE PATENTANMELDUNG

(11) **EP 2 146 147 A2**
(43) Veröffentlichungstag der Anmeldung: **20.01.2010**
(21) Anmeldenummer: 09165478.0
(22) Anmeldetag: 15.07.2009
(51) Int. Cl.: F24C 7/08

(54) **Backofen und Verfahren zum Betreiben eines Backofens**

(30) Priorität: 16.07.2008 DE 102008033423
(71) Anmelder: Werner & Pfleiderer Lebensmitteltechnik Sachsen GmbH, 02689 Sohland (DE)
(72) Erfinder: Oertelt, Olaf, 02708, Lawalde OT Streifeld (DE)
(74) Vertreter: Bittner, Bernhard

(57) **Zusammenfassung**

Ein Backofen (1) zum Backen von Backgut mit wenigstens einem Backraum (2) in dem das zu backende Backgut einführbar ist, mit einer ersten durch elektrischen Strom betriebenen Heizeinrichtung (4) zur Erwärmen des Backraums (2) dieses Backofens und mit einer zweiten durch elektrischen Strom betriebenen Heizeinrichtung (6) zur Erwärmung des Backraums (2). Erfindungsgemäß sind die erste Heizeinrichtung (4) und die zweite Heizeinrichtung (6) steuerbar und eine Steuerungseinrichtung (10) ist vorgesehen, welche bewirkt, dass die erste Heizeinrichtung (4) und die zweite Heizeinrichtung (6) zu unterschiedlichen Zeitabschnitten mit elektrischem Strom versorgt werden.

## Beschreibung

Die vorliegende Erfindung bezieht sich auf einen Backofen und ein Verfahren, um diesen zu betreiben.

Backöfen sind aus dem Stand der Technik seit langem bekannt. Dabei sind auch Backöfen bekannt, welche einen Temperatursensor aufweisen, der die Temperatur in einem Backraum feststellt sowie eine Steuerung, welche ebenfalls in dem Backofen angeordnete Heizeinrichtungen einschaltet, wenn eine Ist-Temperatur unter eine Soll-Temperatur gesunken ist.

Aus der DE 10 2006/013 806 A1 ist ein Verfahren zum Betrieb eines Backofens mit einem umlaufbeheizten Backraum bekannt. Dabei wird ein Backofen erstmalig auf eine Soll-Backraumtemperatur vorgeheizt. Die Ist-Backraumtemperatur wird während der Betriebsphase auch außerhalb der Backzyklen überwacht. Sobald die Ist-Backtemperatur außerhalb der Backzyklen eine vorgegebene unterhalb der Soll-Backtemperatur liegende Grenztemperatur unterschreitet, wird der Backraum auf die Soll-Backraumtemperatur aufgeheizt.

Derartige Backöfen benötigen üblicherweise eine hohe Stromzufuhr während der Aufwärmphasen. Zu diesem Zwecke müssen entsprechend hohe Anschlusswerte der jeweiligen Stromnetze zur Verfügung stehen bzw. entsprechend dimensionierte Leiterquerschnitte in den jeweiligen Geschäftsräumen, in denen sich der Backofen befindet.

In jüngerer Zeit gehen nunmehr auch Lebensmittelketten dazu über, Backwaren anzubieten. Dabei stehen jedoch oftmals nicht die nötigen Stromressourcen zur Verfügung, um einen aus dem Stand der Technik bekannten Ladenbackofen zu betreiben.

Der vorliegenden Erfindung liegt daher die Aufgabe zugrunde, einen Ladenbackofen zur Verfügung zu stellen, der einerseits eine effiziente Erwärmung erlaubt und der andererseits aufgrund seiner Leistungsaufnahme auch mit geringeren Anschlusswerten betrieben werden kann. Dies wird erfindungsgemäß von einem Ladenbackofen nach Anspruch 1 erreicht. Vorteilhafte Ausführungsformen und Weiterbildungen sind Gegenstand der Unteransprüche.

Ein erfindungsgemäßer Backofen zum Backen von Backgut weist einen Backraum auf, in den das zu backende Backgut einführbar ist. Weiterhin ist eine erste durch einen elektrischen Strom betriebene Heizeinrichtung zur Erwärmung dieses Backraums vorgesehen und eine zweite durch elektrischen Strom betriebene Heizeinrichtung zur Erwärmung des Backraums. Erfindungsgemäß sind die erste Heizeinrichtung und die zweite Heizeinrichtung steuerbar und eine Steuerungseinrichtung ist vorgesehen, die bewirkt, dass die erste Heizeinrichtung und die zweite Heizeinrichtung zu unterschiedlichen Zeitabschnitten mit elektrischem Strom versorgt werden.

Im Stand der Technik wird bei Einstellen einer Soll-Temperatur die Ist-Temperatur auf diesen Soll-Wert gebracht, d. h. in diesem Falle schalten alle Heizeinrichtungen ein und bei Erreichen der Soll-Temperatur wieder aus, so dass in den jeweiligen Erwärmungsphasen ein hoher Strombedarf nötig ist.

Im Falle der Erfindung ist jedoch sicher gestellt, dass die beiden Heizeinrichtungen, die bevorzugt unabhängig voneinander steuerbar sind, nicht gleichzeitig betrieben werden, um eine Temperaturerhöhung innerhalb des Backraumes zu erreichen. Vorzugsweise sind die beiden Heizeinrichtungen innerhalb des Backraums zueinander beabstandet.

Vorteilhaft weist der Backofen eine Sensoreinrichtung auf, welche eine Temperatur im Inneren des Backraums misst. In Abhängigkeit von dieser gemessenen Temperatur werden die beiden Heizeinrichtungen aktiviert. Vorzugsweise weist die Steuereinrichtung eine Schalteinrichtung auf, die bewirkt, dass die erste Heizeinrichtung und die zweite Heizeinrichtung abwechselnd mit elektrischem Strom versorgt werden.

Damit werden, um eine Soll-Temperatur in dem Backraum zu erreichen, zwar beide Heizeinrichtungen angesprochen, jedoch jeweils abwechselnd zueinander, so dass verhindert wird, dass beide Heizeinrichtungen gleichzeitig betätigt werden. Bevorzugt bewirkt die Schalteinrichtung, dass während eines Heizvorgangs stets genau eine der beiden Heizeinrichtungen mit Strom versorgt wird.

Bei einer weiteren vorteilhaften Ausführungsform ist die Steuerungseinrichtung derart gestaltet, dass sie Zeitabschnitte, während denen die erste Heizeinrichtung oder die zweite Heizeinrichtung mit elektrischem Strom versorgt werden, unter einer Sekunde, bevorzugt unter 500 Millisekunden, bevorzugt unter 200 Millisekunden, besonders bevorzugt unter 100 Millisekunden, besonders bevorzugt unter 50 Millisekunden und besonders bevorzugt unter 10 Millisekunden liegt. Durch diesen vergleichsweise hochfrequenten Wechsel der Bestromung der beiden Heizeinrichtungen wird erreicht, dass insgesamt eine hohe Heizleistung erreicht wird. Dabei wird darauf hingewiesen, dass auf diese Weise die Gesamtleistung des Backofens, d. h. die Summe aus den einzelnen Leistungen der beiden Heizeinrichtungen höher sein kann, als es die zur Verfügung stehenden Anschlüsse erlauben würden.

Bevorzugt wird daher zunächst eine Heizeinrichtung während des oben genannten Zeitabschnitts betrieben, anschließend die andere und hieran anschließend wieder die erstgenannte Heizeinrichtung. Vorzugsweise weisen die Heizeinrichtungen Energierspeicherelemente auf, welche eine kurzfristige Speicherung der an sie abgegebenen elektrischen Energie aufweisen, so dass sie auch während derjenigen Zeitabschnitte, in denen keine elektrische Energie von aussen an sie abgegeben wird, versorgt sind. Vorteilhaft weist der Backofen eine Stormversorgungseinrichtung auf, welche die beiden Heizeinrichtungen mit elektrischen Strom versorgt.

Bei einer weiteren vorteilhaften Ausführungsform weist die Steuerungseinrichtung bzw. die Schalteinrichtung wenigstens ein Halbleiterrelais auf. Damit wird bevorzugt insbesondere im Falle einer Temperaturanforderung an die Heizeinrichtungen die entsprechenden Halbleiterrelais getriggert und bevorzugt in einem Millisekundenbereich geschalten. Vorzugsweise wird dieses Schalten durch eine SPS-Steuerung realisiert.

Bei einer weiteren vorteilhaften Ausführungsform weist der Backofen wenigstens eine Regelungseinrichtung für wenigstens eine der Heizeinrichtungen auf. Dies bedeutet, dass die jeweilige Heizeinrichtung mit dem oben erwähnten Temperatursensor zusammenwirkt und jeweils dann ein Heizvorgang eingeleitet wird, wenn eine Ist-Temperatur unterhalb einer Soll-Temperatur liegt. Bevorzugt sind für die beiden Heizeinrichtungen jeweils Regeleinrichtungen vorgesehen.

Bevorzugt handelt es sich bei der ersten Heizeinrichtung um eine in dem Backraum angeordnete Heizeinrichtung zur Erzeugung von Unterhitze. Diese Heizeinrichtung ist damit bevorzugt in einem Bodenbereich des Backraums angeordnet. Bei der zweiten Heizeinrichtung handelt es sich vorzugsweise um eine Heizeinrichtung zur Erzeugung von Oberhitze, d. h. in diese Heizeinrichtung ist besonders bevorzugt in einem oberen Bereich des Backofens bzw. Backraumes angeordnet.

Bei einer weiteren vorteilhaften Ausführungsform weist der Backofen eine dritte Heizeinrichtung auf, die unabhängig von der ersten und zweiten Heizeinrichtung steuerbar ist. Dabei handelt es sich besonders bevorzugt um eine Beschwadungseinrichtung, welche heiße Luft in dem Backraum führt. Diese Heizeinrichtung ist dabei bevorzugt außerhalb des Backraums angeordnet und lediglich die von ihr erzeugte heiße Luft wird in das Innere des Backraums geführt.

Vorteilhaft bewirkt die Steuerungseinrichtung, dass die erste Heizeinrichtung, die zweite Heizeinrichtung und die beschriebene dritte Heizeinrichtung zu unterschiedlichen Zeitabschnitten mit elektrischem Strom versorgt werden. Dabei ist es möglich, dass die jeweiligen Zeitabschnitte vollständig voneinander getrennt sind. Es wäre jedoch auch möglich, dass die dritte Heizeinrichtung permanent in Betrieb ist und jeweils abwechselnd die erste und die zweite Heizeinrichtung zugeschaltet werden. Auch könnten die Zeitabschnitte, in denen die drei Heizeinrichtungen betrieben werden, vollständig voneinander getrennt sein.

Bevorzugt ist eine Eingabeeinrichtung vorgesehen, über die der Benutzer wählen kann, ob er die drei Heizeinrichtungen abwechselnd betreiben will, oder ob die dritte Heizeinrichtung permanent betrieben werden soll. Dies kann der Benutzer beispielsweise von dem zur Verfügung stehenden Stromnetz abhängig machen.

Damit ist es auch denkbar, die dritte Heizeinrichtung ebenfalls in die beschriebene Leistungsbegrenzung zu integrieren, so dass beispielsweise alle drei Heizeinrichtungen im Millisekundenbereich abwechselnd gegeneinander getriggert bzw. geschalten werden. Auf diese Weise ist eine noch weitere Reduzierung der Anschlussleistung möglich.

Bei einer weiteren vorteilhaften Ausführungsform weist der Backofen mehrere Backräume auf, wobei jeder dieser Backräume jeweils eine erste Heizeinrichtung und eine zweite Heizeinrichtung aufweist und die Heizeinrichtungen unabhängig voneinander steuerbar sind. Damit ist es möglich, in mehreren unterschiedlichen Backräumen jeweils Backgut zu backen, wobei die einzelnen Backräume unterschiedlich voneinander betrieben werden können.

Weiterhin ist es auch möglich, dass die Steuerungseinrichtung mit einer Gesamtsteuerung die Heizeinrichtungen mehrerer Backräume steuert, so dass beispielsweise die zwei Heizeinrichtungen zweier Backräume jeweils abwechselnd ein und aus geschalten werden.

Die vorliegende Erfindung ist weiterhin auf ein Verfahren zum Betreiben eines Backofens gerichtet, wobei der Backofen einen Backraum aufweist, in den das zu backende Backgut einführbar ist, sowie eine erste durch elektrischen Strom betreibbare Heizeinrichtung zur Erwärmung des Backraumes dieses Backofens und eine zweite durch elektrischen Strom betreibbare Heizeinrichtung zur Erwärmung des Backraums. Erfindungsgemäß werden die erste Heizeinrichtung und die zweite Heizeinrichtung derart gesteuert, dass die erste Heizeinrichtung und die zweite Heizeinrichtung zu unterschiedlichen Zeitabschnitten mit elektrischem Strom versorgt werden.

Damit ist es auch möglich, durch das erfindungsgemäße Verfahren zum Betreiben eines Backofens dessen Leistungsaufnahme insgesamt zu reduzieren.

Vorteilhaft werden die erste Heizeinrichtung und die zweite Heizeinrichtung zu keinem Zeitpunkt gleichzeitig mit elektrischem Strom versorgt. Vorzugsweise werden die beiden Heizeinrichtungen derart angesteuert, dass die zeitlichen Abschnitte, in denen die erste Heizeinrichtung betrieben wird und die Abschnitte, in denen die zweite Heizeinrichtung betrieben wird, im Wesentlichen gleich lang sind. Auf diese Weise ist eine besonders gleichmäßige Leistungsaufteilung möglich.

Bei einer weiteren vorteilhaften Ausführungsform wird eine dritte Heizeinrichtung des Backofens im Wesentlichen permanent betrieben.

Vorzugsweise unterscheiden sich die Leistungsaufnahmen der ersten und der zweiten Heizeinrichtung um nicht mehr als 50 % voneinander, bevorzugt um nicht mehr als 30 %. Durch diese ähnlichen Leistungsaufnahmen wird insgesamt eine weitgehend spitzenfreie Leistungsverteilung innerhalb des Backofens erreicht.

Weiterhin wäre es auch möglich, im Falle dreier Heizeinrichtungen die beiden schwächeren gleichphasig zu schalten und die stärkere hierzu gegenphasig.

### Weitere Vorteile und Ausführungsformen ergeben sich aus den beigefügten Zeichnungen:

Darin zeigen:
- Fig. 1: einen erfindungsgemäßen Etagenbackofen; und
- Fig. 2: ein Blockdiagramm zur Veranschaulichung der Ansteuerung des Backofens.

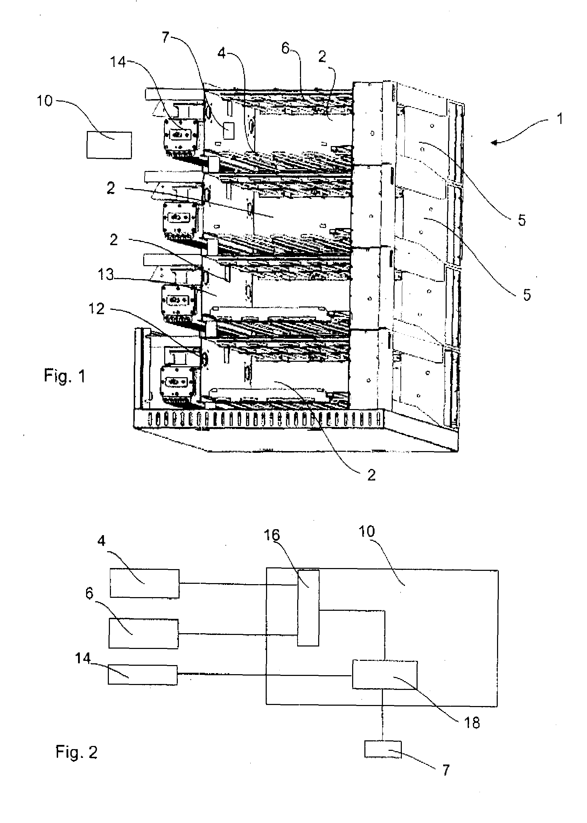

Figur 1 zeigt einen erfindungsgemäßen Backofen 1. Dieser Backofen 1 weist insgesamt vier Backräume 2 auf, die übereinander angeordnet sind. Jeder einzelne Backraum 2 weist eine erste Heizeinrichtung 4 für Unterhitze und eine zweite Heizeinrichtung 6 für Oberhitze auf.

Weiterhin ist jeweils eine dritte Heizeinrichtung 14 vorgesehen, welche hier außerhalb des jeweiligen Backraums 2 angeordnet ist und erhitze Luft erzeugt, die in das Innere des jeweiligen Backraums 2 geführt wird. Auf diese Weise wird eine Beschwadungsheizung zur Verfügung gestellt. Die erhitzte Luft wird über Öffnungen 12, die sich in der Rückwand 13 des jeweiligen Backraumes 2 befinden, in das Innere des Backraumes geführt. Das Bezugszeichen 5 bezieht sich auf Öffnungen, über welche Backgut in die einzelnen Backräume 2 eingeführt werden kann.

Die vier Backräume 2 können unabhängig voneinander betrieben werden.

Das Bezugszeichen 10 bezieht sich auf eine (nur schematisch dargestellte) Steuerungseinrichtung für den erfindungsgemäßen Backofen. Das Bezugszeichen 7 kennzeichnet eine ebenfalls schematisch dargestellte Sensoreinrichtung, mit der die Temperatur in dem Backraum 2 gemessen wird.

Bei der in Figur 1 gezeigten Ausführungsform arbeitet die dritte Heizeinrichtung 14 ständig und versorgt damit den Backraum 2 permanent mit erhitzter Luft, um eine gewisse Innentemperatur zu halten.

Die Steuerungseinrichtung 10 bewirkt, dass die ersten und zweiten Heizeinrichtungen 4 und 6 jeweils mit elektrischer Energie versorgt werden, wenn eine Ist-Temperatur im Inneren des Backraumes 2 unter eine Soll-Temperatur abgefallen ist.

Zu diesem Zweck weist die Steuerungseinrichtung 10 eine Vergleichseinheit auf, welche die von der Sensoreinrichtung 7 ausgegebenen Werte mit den jeweiligen Soll-Werten vergleicht.

Figur 2 zeigt ein Blockdiagramm zur Veranschaulichung einer erfindungsgemäßen Steuerung. Dabei weist die Steuerungseinrichtung 10 eine Schalteinrichtung 16 auf, welche die Stromzufuhr zu den beiden Heizeinrichtung 4 und 6 steuert. Falls durch die Sensoreinrichtung 7 ein zu niedriger Temperaturwert innerhalb der Backräume 2 detektiert wird, wird dies an einem Regler 18 ausgegeben, der wiederum die Schalteinrichtung 16 ansteuert. Die Schalteinrichtung 16 weist Halbleiterrelais auf, welche die beiden Heizeinrichtungen 4 und 6 ansteuern.

Dabei werden die beiden Heizeinrichtungen 4,6 gegeneinander, bevorzugt in Millisekundenbereich geschalten, d. h. jeweils abwechselnd wird einmal die erste Heizeinrichtung 4 und dann die Heizeinrichtung 6 mit Strom versorgt. Auf diese Weise ist es möglich, dass die beiden Heizeinrichtungen 4 und 6 hinsichtlich ihrer Leistung stärker dimensioniert sein können als in dem Fall, in dem beide gleichzeitig betrieben werden. Gleichzeitig wird durch das gegenphasige Schalten ein effizienter Heizvorgang ermöglicht.

Wie oben ausgeführt, ist die dritte Heizeinrichtung 14 ständig in Betrieb. Es wäre jedoch auch möglich, die Schalteinrichtung 16 derart auszuführen, dass sie die drei Heizeinrichtungen 4, 6 und 14 versorgt und gegenläufig ein- bzw. ausschaltet.

Die einzelnen Heizeinrichtungen 4 und 6, die in Figur 1 in den einzelnen Backräumen 2 angeordnet sind, lassen sich unabhängig voneinander ansteuern. Dabei ist es möglich, auch mehrere Backräume gleichzeitig nach Wunsch zu beheizen. Der in Figur 1 gezeigte Ladenbackofen kann auch mit mehreren oder wenigeren Etagen bzw. Backräumen ausgeführt werden. Damit weist jedoch jeder Backraum insgesamt drei Heizungsregelungen auf. Bei der Schalteinrichtung 16 handelt es sich bevorzugt um eine SPS-Steuerung.

Auch ist es zusätzlich möglich, die Heizeinrichtung mehrerer Backräume gegeneinander zu schalten, um auf diese Weise für alle Backräume die Temperaturen auf den gewünschten Soll-Wert zu bringen.

Auch wäre es beispielsweise möglich, die ersten und zweiten Heizeinrichtungen aller vier in Figur 1 gezeigten Backräume gegeneinander zu schalten. So wäre es beispielsweise möglich, durch entsprechende Ansteuerung die beiden ersten Heizeinrichtungen 4 der beiden oberen Backräume 2 und die beiden zweiten Heizeinrichtungen 6 der beiden unteren Backräume 2 gleichzeitig anzusteuern und in der jeweiligen Gegenphase die beiden zweiten Heizeinrichtungen 6 der beiden oberen Backräume 2 und die beiden ersten Heizeinrichtungen 4 der beiden unteren Backräume 2 zu schalten.

Auf diese Weise ist es möglich, einen weitgehend kontinuierlichen Leistungsbedarf zu erreichen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Backofen
- 2: Backraum
- 4: erste Heizeinrichtung
- 5: Öffnungen für Backgut
- 6: zweite Heizeinrichtung
- 7: Sensoreinrichtung
- 10: Steuerungseinrichtung
- 12: Öffnungen
- 13: Rückwand
- 14: dritte Heizeinrichtung
- 16: Schalteinrichtung
- 18: Regler

## Patentansprüche

1. Backofen (1) zum Backen von Backgut mit einem Backraum (2) in den das zu backende Backgut einführbar ist, mit einer ersten durch elektrischen Strom Heizeinrichtung (4) zur Erwärmung des Backraums (2) dieses Backofens (1), und mit einer zweiten durch elektrischen Strom betriebenen Heizeinrichtung (6) zur Erwärmung des Backraums (2),
**dadurch gekennzeichnet, dass**
die erste Heizeinrichtung (4) und die zweite Heizeinrichtung (6) steuerbar sind und eine Steuerungseinrichtung (10) vorgesehen ist, welche bewirkt, dass die erste Heizeinrichtung (4) und die zweite Heizeinrichtung (6) zu unterschiedlichen Zeitabschnitten mit elektrischem Strom versorgt werden.

2. Backofen (1) nach Anspruch 1,
**dadurch gekennzeichnet, dass**
die Steuerungseinrichtung (10) eine Schalteinrichtung (16) aufweist, welche bewirkt, dass die erste Heizeinrichtung (4) und die zweite Heizeinrichtung (6) abwechselnd mit elektrischem Strom versorgt werden.

3. Backofen (1) nach wenigstens einem der vorangegangenen Ansprüche,
**dadurch gekennzeichnet, dass**
die Steuerungseinrichtung (10) derart gestaltet ist, dass die Zeitabschnitte, während denen die erste Heizeinrichtung (4) oder die zweite Heizeinrichtung (6) mit elektrischem Strom versorgt werden, unter 500ms, bevorzugt unter 200ms, besonders bevorzugt unter 100ms und besonders bevorzugt unter 50ms liegt.

4. Backofen (1) nach wenigstens einem der vorangegangenen Ansprüche,
**dadurch gekennzeichnet, dass**
die Steuerungseinrichtung (10) wenigstens ein Halbleiterrelais (12) aufweist.

5. Backofen (1) nach wenigstens einem der vorangegangenen Ansprüche,
**dadurch gekennzeichnet, dass**
der Backofen (1) wenigstens eine Regelungseinrichtung (18) für wenigstens eine der Heizeinrichtungen (4, 6) aufweist.

6. Backofen (1) nach wenigstens einem der vorangegangenen Ansprüche,
**dadurch gekennzeichnet, dass**
der Backofen eine dritte Heizeinrichtung (14) aufweist, die unabhängig von der ersten (4) und der zweiten (6) Heizeinrichtung steuerbar ist.

7. Backofen (1) nach Anspruch 6,
**dadurch gekennzeichnet, dass**
die Steuerungseinrichtung (10) bewirkt, dass die erste Heizeinrichtung (4), die zweite Heizeinrichtung (6) und die dritte Heizeinrichtung (14) zu unterschiedlichen Zeitabschnitten mit elektrischem Strom versorgt werden.

8. Backofen (1) nach wenigstens einem der vorangegangenen Ansprüche,
**dadurch gekennzeichnet, dass**
der Backofen (1) mehrere Backräume (2), aufweist, wobei jeder dieser Backräume (2) jeweils eine erste Heizeinrichtung (4) und eine zweite Heizeinrichtung (6) aufweist und die Heizeinrichtungen (4, 6) unabhängig voneinander steuerbar sind.

9. Verfahren zum Betreiben eines Backofens (1), wobei der Backofen (1) wenigstens einen Backraum (2), in den das zu backende Backgut einführbar ist, eine ersten durch elektrischen Strom betreibbare Heizeinrichtung (4) zur Erwärmung des Backraums (2) dieses Backofens (1) und eine zweite durch elektrischen Strom betreibbare Heizeinrichtung (6) zur Erwärmung des Backraums (2), aufweist,
**dadurch gekennzeichnet, dass**
die erste Heizeinrichtung (4) und die zweite Heizeinrichtung (6) derart gesteuert werden, dass die erste Heizeinrichtung (4) und die zweite Heizeinrichtung (6) zu unterschiedlichen Zeitabschnitten mit elektrischem Strom versorgt werden.

10. Verfahren nach Anspruch 9,
**dadurch gekennzeichnet, dass**
die erste Heizeinrichtung (4) und die zweite Heizeinrichtung (6) zu keinem Zeitpunkt gleichzeitig mit elektrischem Strom versorgt werden.
